(19) Europäisches Patentamt
European Patent Office
Office européen des brevets

(11) Veröffentlichungsnummer: **0 410 239 A1**

(12) **EUROPÄISCHE PATENTANMELDUNG**

(21) Anmeldenummer: **90113509.5**

(22) Anmeldetag: **14.07.90**

(51) Int. Cl.5: **C08L 69/00**, //(C08L69/00, 67:04,51:04)

(30) Priorität: **28.07.89 DE 3925051**

(43) Veröffentlichungstag der Anmeldung:
**30.01.91 Patentblatt 91/05**

(84) Benannte Vertragsstaaten:
**DE FR GB IT NL**

(71) Anmelder: **BAYER AG**

**D-5090 Leverkusen 1 Bayerwerk(DE)**

(72) Erfinder: **Eckel, Thomas, Dr.**
**Gneisenaustrasse 15a**
**D-4047 Dormagen 1(DE)**
Erfinder: **Leitz, Edgar, Dr.**
**Goethestrasse 63**
**D-4047 Dormagen 1(DE)**
Erfinder: **Westeppe, Uwe, Dr.**
**Vogelskamp 72**
**D-4020 Mettmann(DE)**

(54) **Polycarbonat-Formmassen.**

(57) Thermoplastische Formmassen enthaltend

A. 5 bis 98, vorzugsweise 40 bis 97 Gew.-%, bezogen auf die Summe A und B, eines speziellen Polycarbonats auf Basis von substituierten Dihydroxydiphenylcycloalkanen,
und
B. 2 bis 95, vorzugsweise 3 bis 60 Gew.-%, bezogen auf die Summe A und B, eines thermoplastischen Copolymerisats aus cyclischen Carbonaten und cyclischen Estern (Lactonen)
und gegebenenfalls
C. 0 bis 200, vorzugsweise 2 bis 100 Gew.-Teile pro 100 Gew.-Teile A und B eines Pfropfpolymerisats harzbildender Monomerer (Pfropfmonomere) auf einen Kautschuk (Pfropfgrundlage).

EP 0 410 239 A1

# POLYCARBONAT-FORMMASSEN

Gegenstand der Erfindung sind thermoplastische Formmassen enthaltend

A. 5 bis 98, vorzugsweise 40 bis 97 Gew.-%, bezogen auf die Summe A und B, eines speziellen Polycarbonats auf Basis von substituierten Dihydroxydiphenylcycloalkanen, und

B. 2 bis 95, vorzugsweise 3 bis 60 Gew.-%, bezogen auf die Summe A und B, eines thermoplastischen Copolymerisats aus cyclischen Carbonaten und cyclischen Estern (Lactonen)

und gegebenenfalls

C. 0 bis 200, vorzugsweise 2 bis 100 Gew.-Teile pro 100 Gew.-Teile A und B eines Pfropfpolymerisats harzbildender Monomerer (Pfropfmonomere) auf einen Kautschuk (Pfropfgrundlage).

Aromatische Polycarbonate auf Basis von substituierten Dihydroxydiphenylcycloalkanen zeichnen sich durch hohe Wärmeformbeständigkeit aus; für die Herstellung von großformatigen und komplizierten Formteilen, die besonders im Automobilbau benötigt werden, sind jedoch Zähigkeit und Fließfähigkeit dieser Polycarbonate verbesserungsbedürftig.

Polycarbonat-Formmassen sind im allgemeinen nicht genügend beständig gegenüber Chemikalien, insbesondere organischen Flüssigkeiten wie Benzin, und daher für Kraftfahrzeugteile, die benzin- und ölbeständig sein müssen, nur sehr bedingt verwendbar.

Die erfindungsgemäßen Formmassen aus speziellen aromatischen Polycarbonaten und Copolymerisaten von cyclischen aliphatischen Carbonaten und Lactonen haben hohe Fließfähigkeiten und sehr gute Kerbschlagzähigkeiten. Durch Zusatz von Pfropfpolymerisaten wird auch die Tieftemperaturzähigkeit verbessert. Ihre Lösungsmittelbeständigkeit (ESC-Verhalten) ist ebenfalls verbessert und wird bei Zusatz von Pfropfpolymerisaten besonders ausgeprägt.

Polycarbonate A im Sinne der Erfindung sind hochmolekulare, thermoplastische, aromatische Polycarbonate mit Molekulargewichten $\overline{M}_w$ (Gewichtsmittel) von mindestens 10.000, vorzugsweise von 20.000 bis 300.000, die bifunktionelle Struktureinheiten der Formel (I) enthalten,

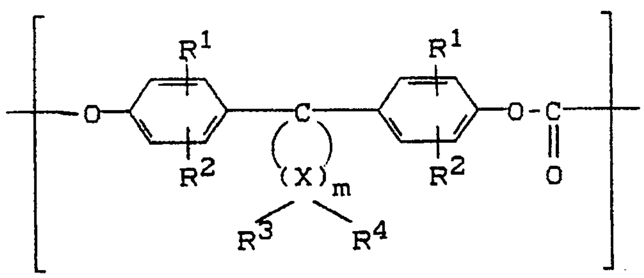

(I)

worin

$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl, $C_1$-$C_4$-Alkyl, insbesondere Benzyl,

m eine ganze Zahl von 4 bis 7, bevorzugt 4 oder 5,

$R^3$ und $R^4$ für jedes X individuell wählbar, unabhängig voneinander Wasserstoff oder $C_1$-$C_6$-Alkyl und

X Kohlenstoff bedeuten,

mit der Maßgabe, daß an mindestens einem Atom X $R^3$ und $R^4$ gleichzeitig Alkyl bedeuten.

Ausgangsprodukte für die Polycarbonate A sind Dihydroxydiphenylcycloalkane der Formel (II)

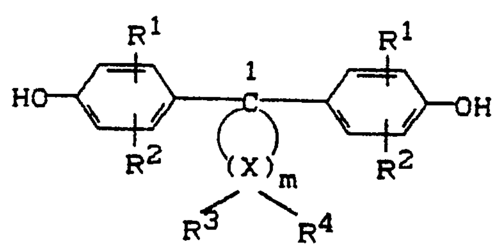

(II)

worin

X, $R^1$, $R^2$, $R^3$, $R^4$ und m die Formel (I) genannte Bedeutung haben.

Bevorzugt sind an 1 - 2 Atomen X, insbesondere nur an einem Atom X, $R^3$ und $R^4$ gleichzeitig Alkyl. Bevorzugter Alkylrest ist Methyl; die X-Atome in α-Stellung zu dem di-phenyl-substituierten C-Atom (C-1) sind bevorzugt nicht dialkylsubstituiert, dagegen ist die Alkyldisubstitution in ß-Stellung zu C-1 bevorzugt.

Bevorzugt sind Dihydroxydiphenylcycloalkane mit 5 und 6-Ring C-Atomen im cycloaliphatischen Rest (m = 4 oder 5 in Formel (II)), beispielsweise die Diphenole der Formeln IIa-IIc,

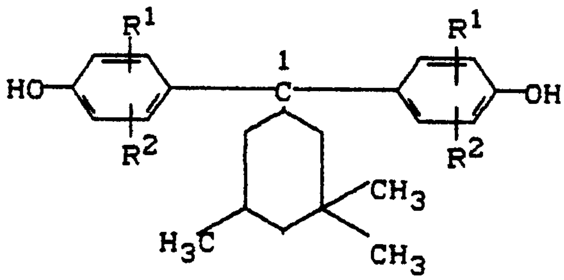

(IIa)

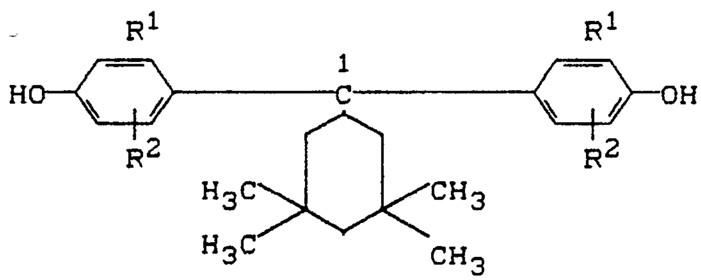

(IIb)

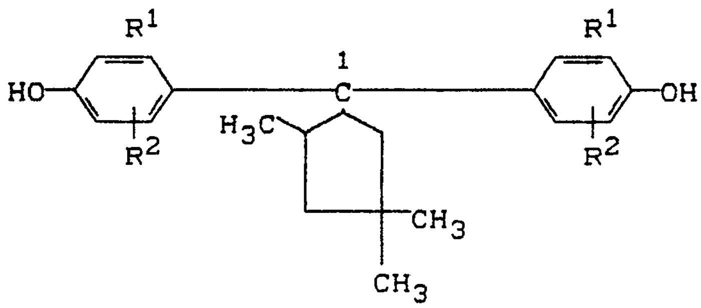

(IIc)

wobei das 1,1-Bis-(4-hydroxyphenyl)-3,3,5-trimethylcyclohexan (Formel IIa mit $R^1$ und $R^2$ gleich H) besonders bevorzugt ist.

Die Polycarbonate A können gemäß der DE-OS 3 832 396 aus Diphenolen der Formel (II) hergestellt werden.

Es können sowohl ein Diphenol der Formel (II) unter Bildung von Homopolycarbonaten als auch mehrere Diphenole der Formel (II) unter Bildung von Copolycarbonaten verwendet werden.

Außerdem können die Diphenole der Formel (II) auch im Gemisch mit anderen Diphenolen, beispielsweise mit denen der Formel (III)

HO-Z-OH (III)

zur Herstellung von hochmolekularen, thermoplastischen, aromatischen Polycarbonaten verwendet werden.

Geeignete andere Diphenole der Formel (III) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (II) oder Heteroatome als Brückenglieder enthalten kann.

Beispiele für Diphenole der Formel (III) sind

Hydrochinon,

Resorcin

Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfone,
Bis-(hydroxyphenyl)-sulfoxide,
α,α′-Bis-(hydroxyphenyl)-diisopropylbenzole
sowie deren kernalkylierte und kernhalogenierte Verbindungen.

Diese und weitere geeignete andere Diphenole sind z.B. in den US-PS 3 028 365, 2 999 835, 3 148 172, 3 275 601, 2 991 273, 3 271 367, 3 062 781, 2 970 131 und 2 999 846, in den deutschen Offenlegungsschriften 1 570 703, 2 063 050, 2 063 052, 2 211 095, der franzö sischen Patentschrift 1 561 518 und in "H. Schnell, Chemistry and Plastics of Polycarbonates, Interscience Publishers, New York 1964", beschrieben.

Bevorzugte andere Diphenole sind beispielsweise:
4,4′-Dihydroxydiphenyl,
2,2-Bis-(4-hydroxyphenyl)-propan,
2,4-Bis-(4-hydroxyphenyl)-2-methylbutan,
1, 1-Bis-(4-hydroxyphenyl)-cyclohexan, α,α′-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α′-Bis-(3,5-dimethyl-4-hydroxyphenyl)-p-diisopropylbenzol,
2,2-Bis-(3,5-dichlor-4-hydroxyphenyl)-propan und
2,2-Bis-(3,5-dibrom-4-hydroxyphenyl)-propan.

Besonders bevorzugte Diphenole der Formel (III) sind beispielsweise:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan und
1,1-Bis-(4-hydroxyphenyl )-cyclohexan.

Insbesondere ist 2,2-Bis-(4-hydroxyphenyl)-propan (Bisphenol A) bevorzugt.

Die anderen Diphenole können sowohl einzeln als auch im Gemisch eingesetzt werden.

Das molare Verhältnis von Diphenolen der Formel (II) zu den gegebenenfalls mitzuverwendenden anderen Diphenolen der Formel (III), ist von 100 Mol-% (II) zu 0 Mol-%. (III) bis 2 Mol-% (II) zu 98 Mol-% (III), vorzugsweise von 100 Mol-% (II) zu 0 Mol-% (III) bis 5 Mol-% (II) zu 95 Mol-% (III) und insbesondere von 100 Mol-% (II) zu 0 Mol-% (III) bis 10 Mol-% (II) zu 90 Mol-% (III) und ganz besonders von 100 Mol-% (II) zu 0 Mol-% (III) bis 20 Mol-% (II) zu 80 Mol-% (III).

Die hochmolekularen Polycarbonate aus den Diphenolen der Formel (II), gegebenenfalls in Kombination mit anderen Diphenolen, können nach bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen erreicht werden. Einige Verzweiger mit drei oder mehr als drei phenolischen Hydroxylgruppen sind:
Phloroglucin,
4,6-Dimethyl-2,4,6-tri-(4-hydroxyphenyl)-hepten-2,
4,6-Dimethyl-2,4,6-tri-(4-hydroxyphenyl)-heptan,
1,3,5-Tri-(4-hydroxyphenyl)-benzol,
1,1,1-Tri-(4-hydroxyphenyl)-ethan,

Tri-(4-hydroxyphenyl)-phenylmethan,
2,2-Bis-(4,4-bis-(4-hydroxyphenyl)-cyclohexyl)-propan,
2,4-Bis-(4-hydroxyphenyl-isopropyl)-phenol,
2,6-Bis-(2-hydroxy-5-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-orthoterephthalsäureester.
Tetra-(4-hydroxyphenyl)-methan,
Tetra-(4-(4-hydroxyphenyl-isopropyl)-phenoxy)-methan und
1,4-Bis-((4′-,4-dihydroxytriphenyl)-methyl )-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentrationen Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (IV) geeignet

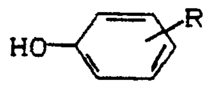

(IV)

worin R einen verzweigten $C_8$- und/oder $C_9$-Alkylrest darstellt. Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol.%, bezogen auf eingesetze Diphenole, eingesetzt.

Die Polycarbonate A können vorzugsweise durch Phasengrenzflächen-Polykondensation (vgl. H. Schnell, "Chemistry and Physics of Polycarbonates", Polymer Reviews, Vol IX, Seite 33 ff ., Interscience Publ. 1964) in an sich bekannter Weise hergestellt werden. Hierbei werden die Diphenole der Formel (II) in wäßrig alkalischer Phase gelöst. Zur Herstellung von Copolycarbonaten mit anderen Diphenolen werden Gemische von Diphenolen der Formel (II) und den anderen Diphenolen, beispielsweise denen der Formel (III), eingesetzt. Zur Regulierung des Molekulargewichts können Kettenabbrecher z.B. der Formel (IV) zugegeben werden. Dann wird in Gegenwart einer inerten, vorzugsweise Polycarbonat lösenden, organischen Phase mit Phosgen durch Phasengrenzflächen-Polykondensation umgesetzt. Die Reaktionstemperatur ist 0 °C bis 40 °C.

Die gegebenenfalls mitverwendeten Verzweiger (bevorzugt 0,05 bis 2,0 Mol-%.) können entweder mit den Diphenolen in der wäßrig alkalischen Phase vorgelegt werden oder in dem organischen Lösungsmittel gelöst vor der Phosgenierung zugegeben werden.

Neben den Diphenolen der Formel (II) und gegebenenfalls anderen Diphenolen (III) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (II) und gegebenenfalls Formel (III); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächen-Polykondensation dient beispielsweise Methylenchlorid, Chlorbenzol sowie Mischungen aus Methylenchlorid und Chlorbenzol.

Als wäßrige alkalische Phase dient beispielsweise wäßrige NaOH-Lösung.

Die Herstellung der Polycarbonate A durch Phasengrenzflächen-Polykondensation kann in üblicher Weise durch Katalysatoren wie tertiäre Amine, insbesondere tertiäre aliphatische Amine wie Tributylamin oder Triethylamin beschleunigt werden; die Katalysatoren können in Mengen von 0,05 bis 10 Mol-%, bezogen auf Mole an eingesetzen Diphenolen eingesetzt werden. Die Katalysatoren können vor Beginn der Phosgenierung oder während oder auch nach der Phosgenierung zugesetzt werden.

Die Polycarbonate A können auch nach dem bekannten Verfahren in homogener Phase, dem sogenannten "Pyridinverfahren" sowie durch Schmelzumesterung unter Verwendung von beispielsweise Diphenylcarbonat anstelle von Phosgen hergestellt werden.

Die Polycarbonate A haben bevorzugt Molekulargewichte $\overline{M}_w$ (Gewichtsmittel, ermittelt durch Gelchromatographie nach vorheriger Eichung) von mindestens 10.000, besonders bevorzugt von 20.000 bis 300.000 und insbesondere von 20.000 bis 80.000. Sie können linear oder verzweigt sein, sie sind Homopolycarbonate oder Copolycarbonate auf Basis der Diphenole der Formel (II).

Durch den Einbau der Diphenole der Formel (II) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (II), in denen m 4 oder 5 ist, und ganz besonders für die Polycarbonate auf Basis dar Diphenole (IIa), worin $R^1$ und $R^2$ unabhängig voneinander die für Formel (II) genannte Bedeutung haben und besonders bevorzugt Wasserstoff sind.

Die besonders bevorzugten Polycarbonate A sind also solche, in denen in den Struktureinheiten der Formel (I) m = 4 oder 5 ist und ganz besonders solche aus Einheiten der Formel (V)

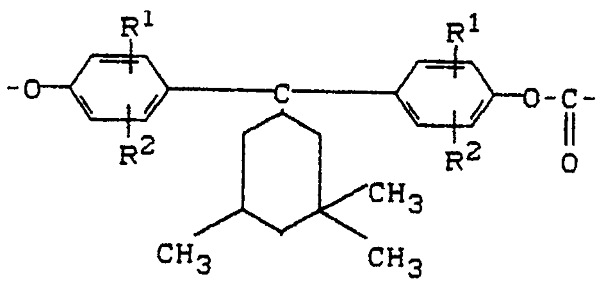

(V)

worin

$R^1$ und $R^2$ die für Formel (I) genannte Bedeutung haben, besonders bevorzugt aber Wasserstoff sind.

Diese Polycarbonate auf Basis der Diphenole der Formel (IIa), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten war.

Durch eine beliebige Kombination mit anderen Diphenolen, insbesondere mit denen der Formel (III) lassen sich zudem die Polycarbonateigenschaften in günstiger Weise variieren.

Polycarbonate A können auch Mischungen von Polycarbonaten der Formel (I) mit Polycarbonaten auf Basis von Bisphenolen der Formel (III) sein.

Das Copolymerisat B ist aus einem cyclischen aliphatischen Carbonat der Formel (VI)

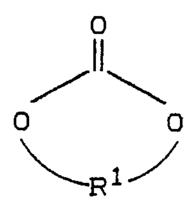

(VI)

und/oder der Formel (VII)

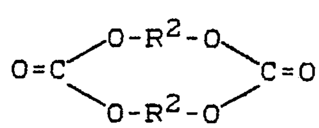

(VII)

und einem cyclischen aliphatischen Ester (Lacton) der Formel (VIII)

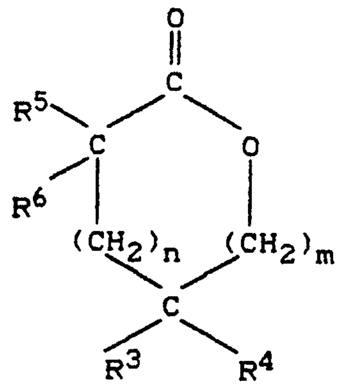

(VIII)

hergestellt.

In den Formeln haben die allgemeinen Reste folgende Bedeutungen:

$R^1$ in (VI) ein lineares $C_3$-$C_{10}$-Alkylen, oder ein Rest der Formeln a) bis 1)

a) $-CH_2CH_2CH(CH_3)-$,

b) $-CH_2CH_2OCH_2CH_2OCH_2CH_2-$,

c) $-CH_2CH(CH_3)CH_2CH_2C(CH_3)_2CH_2-$,

d) 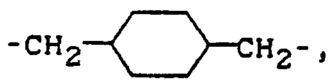, e) 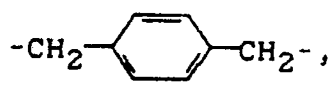,

f) 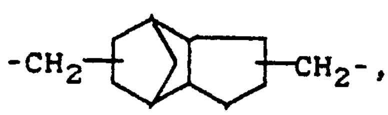,

g) 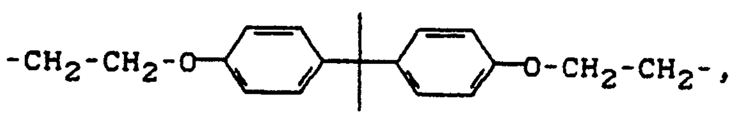,

h) 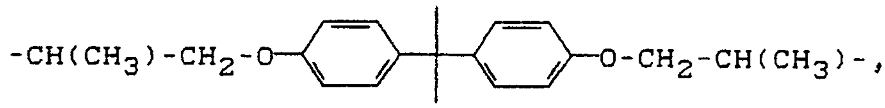

i) 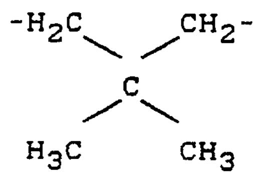 , j) 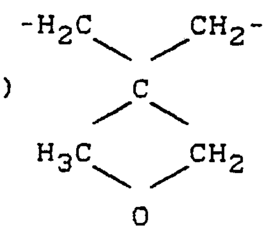 ,

k) 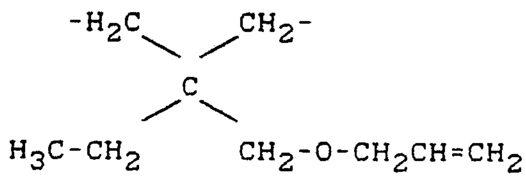 oder

l) 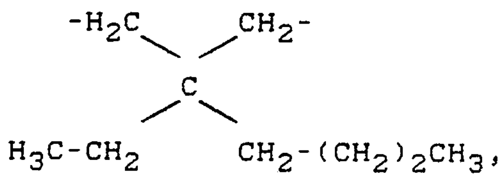

$R^2$ in (VII) ein lineares $C_4$-$C_{12}$-Alkylen oder ein Rest der Formeln m) oder b)
m) $-CH_2-CH_2-O-CH_2-CH_2-$ oder
b) $-CH_2-CH_2-O-CH_2-CH_2-O-CH_2-CH_2$,
$R^3$, $R^4$, $R^5$ und $R^6$ in (VIII) gleich oder verschieden sind und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl, vorzugsweise H, $CH_3$ und $C_2H_5$ sind
und
m und n in (VIII) unabhängig voneinander 0, 1, 2, 3, 4, 5 oder 6 sind.

Bevorzugte Verbindung der Formel (VI) ist Neopentylglykolcarbonat.

Bevorzugte Verbindungen der Formel (VIII) sind $\epsilon$-Caprolacton und Pivalolacton

Die Copolymerisate aus Verbindungen der Formeln (VI) bis (VIII) sind bekannt und ihre Herstellung ist in der DE-OS 3 700 193 beschrieben.

Die erfindungsgemäßen Copolymerisate können statistischen oder sequenzartigen Aufbau aufweisen.

Die mittleren Molekulargewichte $\overline{M}_w$ der Copolymerisate B sind 2.000 bis 500.000 g/Mol, vorzugsweise 5.000 bis 250.000 g/Mol.

Die erfindungsgemäß verwendeten Copolymerisate B enthalten 98-40 Gew.-%, bevorzugt 95-50 Gew.-%, cyclische, aliphatische Carbonate in polymerisierter Form und 60-2 Gew.-%, bevorzugt 50-5 Gew.-%, cyclische, aliphatische Ester in polymerisierter Form.

Die Copolymerisate B können durch Lösungspolymerisation in aprotischen organischen Lösungsmitteln, vorzugsweise bei +20 °C bis -30 °C mit alkalimetallorganischen Verbindungen als Initiatoren hergestellt werden.

Die Pfropfpolymerisate C stellen Polymerisate harzbildender Monomerer dar, die in Gegenwart von Kautschuken hergestellt worden sind. Sie umfassen z.B. Pfropfcopolymerisate mit kautschukelastischen Eigenschaften, die aus mindestens 2 der folgenden Monomeren hergestellt worden sind:

Chloropren, Butadien-1,3, Isopren, Styrol, Acrylnitril, Ethylen, Propylen, Vinylacetat und (Meth-)Acrylsäureester mit 1 bis 8C-Atomen in der Alkoholkomponente; also Polymerisate, wie sie z.B in "Methoden der Organischen Chemie" (Houben-Weyl), Bd. 14/1, Georg Thieme-Verlag, Stuttgart 1961, S. 393-406 und in C.B. Bucknall, "Toughened Plastics", Appl. Science Publishers, London 1977, beschrieben sind. Bevorzugte Polymerisate C sind partiell vernetzt und besitzen Gelgehalte von über 20 Gew.-%, vorzugsweise über 40 Gew.-%, insbesondere über 60 Gew.-%.

Bevorzugte Pfropfpolymerisate C werden erhalten durch Polymerisation von:

C.1 5 bis 90, vorzugsweise 30 bis 80, Gew.-Teilen, einer Mischung aus

C.1.1 50 bis 95 Gew.-Teilen Styrol, α-Methylstyrol, halogen- oder methylkernsubstituierte Styrole, Methylmethacrylat oder Mischungen dieser Verbindungen und

C.1.2 5 bis 50 Gew.-Teilen Acrylnitril, Methacrylnitril, Methylmethacrylat, Maleinsäureanhydrid, $C_1$-$C_4$-alkyl bzw. phenyl-N-substituierte Maleinimide oder Mischungen dieser Verbindungen in Gegenwart von

C.2 10 bis 95, vorzugsweise 20 bis 70, Gew.-Teilen Kautschuk d.h. Polymerisate mit einer Glasübergangstemperatur unter -10° C.

Bevorzugte Pfropfpolymerisate C sind z.B. mit Styrol und/oder Acrylnitril und/oder (Meth-)Acrylsäurealkylestern bepfropfte Polybutadiene, Butadien/Styrol-Copolymerisate und Acrylatkautschuke; d.h. Copolymerisate der in der DE-OS 1 694 173 beschriebenen Art; mit Acryl-oder Methacrylsäurealkylestern, Vinylacetat, Acrylnitril, Styrol und/oder Alkylstyrolen bepfropfte Polybutadiene, Butadien/Styrol- oder Butadien/Acrylnitril-Copolyperisate, Polyisobutene oder Polyisoprene, wie sie z.B. in der DE-OS 2 348 377 beschrieben sind.

Besonders bevorzugte Polymerisate C sind ABS-Polymerisate, wie sie in den DE-OS 2 035 390 und 2 248 242 beschrieben sind.

Besonders bevorzugte Pfropfpolymerisate C sind Pfropfpolymerisate, die durch Pfropfreaktion von

α. 10 bis 70, vorzugsweise 15 bis 50, insbesondere 20 bis 40 Gew.-%, bezogen auf Pfropfprodukt C, mindestens eines Acrylsäureesters oder Methacrylsäureesters oder 10 bis 70, vorzugsweise 15 bis 50, ins besondere 20 bis 40 Gew.-% eines Gemisches aus 10 bis 50, vorzugsweise 20 bis 35 Gew.-%; bezogen auf Gemisch, Acrylnitril oder Acrylsäureester oder Methacrylsäureester und 50 bis 90, vorzugsweise 65 bis 80 Gew.-%, bezogen auf Gemisch, Styrol, (Pfropfgrundlage C.1) auf.

ß. 30 bis 90, vorzugsweise 50 bis 85, insbesondere 60 bis 80 Gew.-%, bezogen auf Pfropfprodukt C, eines Butadien-Polyerisats mit mindestens 50 Gew.-%, bezogen auf ß, Butadienresten (Pfropfgrundlage C.2) erhältlich ist,

wobei vorzugsweise der Gelanteil des Butadienpolymerisats ß mindestens 70 Gew.-% (in Toluol gemessen), der Pfropfgrad G des Pfropfpolymerisats 0,15 bis 0,55 und der mittlere Teilchendurchmesser $d_{50}$ des Pfropfpolymerisats C 0,05 bis 2 µm, vorzugsweise 0,1 bis 0,6 µm beträgt.

Acrylsäureester und Methacrylsäureester α sind Ester der Acrylsäure oder Methacrylsäure und einwertiger Alkohole mit 1 bis 8 C-Atomen.

Besonders bevorzugt sind Methacrylsäuremethylester, -ethylester, -propylester und -t-butylester sowie Acrylsäure-n-butylester und -t-butylester.

Das Butadienpolymerisat ß kann neben Butadienresten bis zu 50 Gew.-%, bezogen auf ß, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Bevorzugt ist reines Polybutadien.

Zur Herstellung der Pfropfpolymerisate C sind die üblichen Verfahren wie Emulsionssuspensions- oder Massepolymerisation geeignet.

Da bei der Pfropfreaktion die Pfropfmonomeren bekanntlich nicht vollständig auf die Pfropfgrundlage aufgepfropft werden, werden erfindungsggemäß unter Pfropfpolymerisaten C die Produkte verstanden, die durch Polymerisation der Pfropfmonomeren C.1 in Gegenwart der Pfropfgrundlage C.2 gewonnen werden.

Der Pfropfgrad G bezeichnet das Gewichtsverhältnis von aufgepfropften Pfropfmonomeren zur Pfropfgrundlage und ist dimensionslos.

Der mittlere Teilchendurchmesser $d_{50}$ ist der Durchmesser oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Besonders bevorzugte Polymerisate C sind auch Pfropfpolymerisate aus

τ. 20 bis 90 Gew.-% Acrylatkautschuk mit einer Glasübergangstemperatur unter -20° C als Pfropfgrundlage C .2 und

δ. 10 bis 80 Gew.-%, polymerisierbaren, ethylenisch ungesättigten Monomeren, deren Homo- bzw. Copolymerisate eine Glasübergangstemperatur über 25° C haben, als Pfropfmonomere C.1.

Die Acrylatkautschuke τ in diesem Pfropfpolymerisat C sind vorzugsweise aus Acrylsäurealkylestern, gegebenenfalls mit bis zu 40 Gew-.%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Beispiele für vernetzende Monomere sind Ester ungesättigter Monocarbonsäuren mit 3 bis 8

C-Atomen und ungesättigter einwertiger Alkohole mit 3 bis 12C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,02 bis 5, insbesondere 0,05 bis 2 Gew.-%, bezogen auf die Pfropfgrundlage *τ*.

Bei cyclischen vernetzenden Monomeren mit mindestens 3 ethylenisch ungesättigten Gruppen ist es vorteilhaft, die Menge auf unter 1 Gew-% der Pfropfgrundlage zu beschränken.

Bevorzugte "andere" polymerisierbare, ethylenisch ungesättigte Monomere, die neben den Acrylsäureestern gegebenenfalls zur Herstellung der Pfropfgrundlage *τ* dienen können, sind z.B. Acrylnitril, Styrol, α-Methylstyrol, Acrylamide, Vinyl-$C_1$-$C_6$-alkylether Methylmethacrylat, Butadien. Bevorzugte Acrylatkautschuke als Pfropfgrundlage *τ* sind Emulsionspolymerisate, die einen Gelgehalt von mindestens 60 Gew.-% aufweisen.

Weiter als Kautschuke C.2 geeignet sind Silikonkautschuke mit pfropfaktiven Stellen, wie sie in DE-OS 3 704 657, DE-OS 3 704 655, DE-OS 3 631 540 und DE-OS 3 631 539 beschrieben sind.

Der Gelgehalt der Kautschuke C.2 wird bei 25°C in Dimethylformamid bestimmt (M. Hoffmann, H. Krömer, R. Kuhn, Polymeranalytik I und II, Georg Thieme-Verlag, Stuttgart 1977).

Die erfindungsgemäßen Formmassen können weitere, für Polycarbonate sowie Pfropfpolymerisate bekannte Zusätze, wie Stabilisatoren, Pigmente, Entformungsmittel, Flammschutzmittel und Antistatika, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert.

Die Bestandteile können nacheinander oder gleichzeitig gemischt werden.

Weiterer Gegenstand der Erfindung ist also ein Verfahren zur Herstellung der erfindungsgemäßen Formmassen durch Mischen der Bestandteile bei erhöhter Temperatur.

Die erfindungsgemäßen Formmassen können zur Herstellung von Formkörpern jeder Art z.B., durch Spritzgießen verwendet werden. Beispiele für Formkörper sind: Gehäuseteile (z.B. für Haushaltsgeräte, wie Saftpressen, Kaffeemaschinen, Mixer) Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

## Beispiele

### Polycarbonat A

#### A 1

Polycarbonat aus Basis Bisphenol A / 1,1-Bis-(4-hydroxyphenyl)-3,3,5-trimethylcyclohexan (Molverhältnis 45:55):

1436,4 g (6,3 Mol) Bisphenol A (2,2-Bis-(4-hydroxyphenyl)-propan, 2387,0 g (7,7 Mol) 1,1-Bis-(4-hydroxyphenyl)-3,3,5-trimethylcyclohexan, 7476,0 g (84 Mol) 45 %ige NaOH und 33,7 l Wasser werden in einer Inertgas-Atmosphäre unter Rühren gelöst. Dann fügt man eine Lösung von 36,9 g (0,392 Mol) Phenol in 11 l Methylenchlorid und 13 l Chlorbenzol zu. In die gut gerührte Lösung wurden bei pH 13-14 und 21-25°C 2772 g (28 Mol) Phosgen eingeleitet. Danach werden 14 ml Ethylpiperidin zugegeben und noch 45 Min. gerührt. Die bisphenolatfreie wäßrige Phase wird abgetrennt, die organische Phase nach Ansäuern mit

Phosphorsäure mit Wasser elektrolytfrei gewaschen und vom Lösungsmittel befreit. Das Polycarbonat zeigte eine rel. Lösungsviskosität von 1,30. Die Glastemperatur des Polymers wurde zu 206 °C bestimmt (DSC).

A 2

Polycarbonat auf Basis Bisphenol A / 1,1-Bis-(4-hydroxyphenyl)-3,3,5-trimethylcyclohexan (Molverhältnis 60:40). Herstellung wie unter A 1.

Copolymerisate B

Herstellung eines Copolymerisats aus ε-Caprolacton und Neopentylglykolcarbonat (Molverhältnis 20:80):

Zu einer Lösung von 240 g ε-Caprolacton und 960 g Neopentylglykolcarbonat in 10 l Toluol werden bei 15 °C 8 ml n-Butyllithium (2,5 molare Lösung in Hexan) unter Rühren und unter Stickstoff gegeben. Die Polymerisationszeit beträgt bei dieser Temperatur 60 Min. Dem Reaktionsgemisch werden dann 100 ml Methanol / 1 molare Phosphorsäure (1:1) zugesetzt. Das Polymerisat wird in Methanol gefällt, durch Filtration isoliert und getrocknet.

Ausbeute: 1115 g (90,5 %)

Die relative Viskosität beträgt 7,85 (gemessen in einer 20 %igen Lösung in Methylenchlorid bei 20 °C).

Pfropfpolymerisat C

C 1

Pfropfpolymerisat von 50 Gew.-Teilen eines Copolymerisats aus Styrol und Acrylnitril im Verhältnis 72:28 auf 50 Gew.-Teile teilchenförmigen vernetzten Polybutadienkautschuk (mittlerer Teilchendurchmesser $d_{50}$ = 0,4 µm) hergestellt durch Emulsionspolymerisation.

C 2

Pfropfpolymerisat von 20 Gew.-Teilen eines Copolymerisats aus Methylmethacrylat und n-Butylacrylat im Verhältnis 90:10 auf 80 Gew.-Teile teilchenförmigen vernetzten Polybutadienkautschuk (mittlerer Teilchendurchmesser $d_{50}$ = 0,4 µm) hergestellt durch Emulsionspolymerisation.

C 3

Pfropfpolymerisat von 50 Gew.-Teilen eines Copolymerisats aus Styrol und Acrylnitril im Verhältnis 72:28 auf 50 Gew.-Teile teilchenförmigen vernetzten Polysiloxankautschuk (mittlerer Teilchendurchmesser $d_{50}$ = 0,4 µm) hergestellt durch Emulsionspolymerisation.

Herstellung und Prüfung der erfindungsgemäßen Formmassen

A, B und gegebenenfalls C wurden in einem 1,3 l-Innenkneter bei 250 bis 300 °C aufgeschmolzen und homogenisiert.

Aus den erhaltenen Mischungen wurden auf einer Spritzgußmaschine Stäbe der Abmessung 80 x 10 x 4 mm (Verarbeitungstemperatur: 28 °C) hergestellt, an denen die Kerbschlagzähigkeit (nach Methode ISO 180) bei Zimmertemperatur und bei 0 °C gemessen wurde.

Die Fließfähigkeit wurde beurteilt aufgrund des bei der verwendeten Spritzgußmaschine (Massetemperatur: 280 °C) notwendigen Fülldrucks (s. Johannaber, Kunststoffe 74 (1984, 1; s. 1-5) zur Herstellung von Stäben der Abmessung 80 x 10 x 4 mm.

Die Lösungsmittelbeständigkeit ( ESC-Verhalten ) wurde an Stäben der Abmessung 80 x 10 x 4 mm

untersucht. Als Lösungsmittel (Kraftstoffsimulans) wurde eine Mischung aus 50 % Toluol und 50 % Isooctan verwendet. Die Probekörper wurden mit einer Kreisbogenschablone vorgedehnt und 5 Minuten bei Zimmertemperatur im Kraftstoffsimulans gelagert. Die Vordehnung $\epsilon_x$ betrug 0,4 - 2,4 %. Das Spannungsrißverhalten wurde über die Rißbildung bzw. den Bruch in Abhängigkeit von der Vordehnung beurteilt.

Tabelle 1:

| Zusammensetzung der Formmassen und Ihre Eigenschaften | | | | | | |
|---|---|---|---|---|---|---|
| Beispiel | Komponenten | | | Kerbschlagzähigkeit $a_k$ bei RT [kJ/m$^2$] | Fülldruck bei 280 °C [bar] | ESC-Ver Bruch bei $\epsilon_x$ [%] |
| | A 1 | A 2 | B | | | |
| | [Gew.-%] | | | | | |
| 1 (Vergl.) | 100 | - | - | 10 | 323 | 0,4 |
| 2 (Vergl.) | - | 100 | - | 12 | 278 | 0,4 |
| 3 | 80 | - | 20 | 46 | 103 | 0,8 |
| 4 | - | 80 | 20 | 52 | 110 | 0,8 |

Tabelle 2:

| Zusammensetzung der Formmassen und ihre Eigenschaften | | | | | | | | |
|---|---|---|---|---|---|---|---|---|
| Beispiel | Komponenten | | | | | Kerbschlagzähigkeit $a_k$ | | ESC-Verh. Bruch bei $\epsilon_x$ [%] |
| | A 2 | B | C 1 | C 2 | C 3 | bei RT | bei 0 °C | |
| | [Gew.-%] | | | | | [kJ/m$^2$] | | |
| 5 | 64 | 16 | 20 | - | - | 53 | 50 | 1,0 |
| 6 | 68 | 17 | - | 15 | - | 45 | 44 | 1,2 |
| 7 | 64 | 16 | - | - | 20 | 39 | 23 | 2,4 |

Wie Tabelle 1 zeigt, führt der Zusatz von Copolymerisaten B zu Polycarbonaten auf Basis von substituierten Cycloalkanen zu einem erheblichen Anstieg der Kerbschlagzähigkeit bei Raumtemperatur und einer gleichzeitigen Verringerung des Fülldrucks (verbessertes Fließverhalten).

Werden diesen Mischungen Pfropfpolymerisats als dritte Komponente zugesetzt (Tabelle 2), zeigt sich eine besonders ausgeprägte Verbesserung im ESC-Verhalten sowie der Kerbschlagzähigkeit bei tieferen Temperaturen.

## Ansprüche

1. Thermoplastische Formmassen enthaltend

A. 5 bis 98 Gew.-%, bezogen auf die Summe A und B, eines speziellen Polycarbonats auf Basis von substituierten Dihydroxydiphenylcycloalkanen,

und

B. 2 bis 95 Gew.-%, bezogen auf die Summe A und B, eines thermoplastischen Copolymerisats aus cyclischen Carbonaten und cyclischen Estern (Lactonen)

und

C. 0 bis 200 Gew.-Teile pro 100 Gew.-Teile A und B eines Pfropfpolymerisats harzbildender Monomerer (Pfropfmonomere) auf einen Kautschuk (Pfropfgrundlage).

2. Thermoplastische Formmassen gemäß Anspruch 1 enthaltend

A. 5 bis 98 Gew.-%, bezogen auf die Summe von A und B eines Polycarbonats, das die bifunk tionelle

Struktureinheit der Formel (I) enthält,

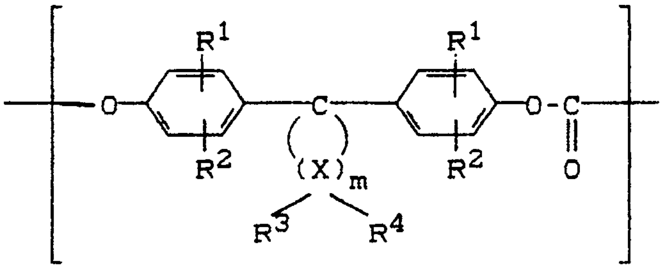

(I)

worin
$R^1$ und $R^2$ unabhängig voneinander Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl, $C_1$-$C_4$-Alkyl, insbesondere Benzyl,
m eine ganze Zahl von 4 bis 7, bevorzugt 4 oder 5,
$R^3$ und $R^4$ für jedes X individuell wählbar, unabhängig voneinander Wasserstoff oder $C_1$-$C_6$-Alkyl
und
X Kohlenstoff bedeuten,
mit der Maßgabe, daß an mindestens einem Atom X $R^3$ und $R^4$ gleichzeitig Alkyl bedeuten.
und
B. 95 bis 2 Gew.-%, bezogen auf die Summe von A und B, eines thermoplastischen Copolymerisats aus cyclischen Carbonaten und cyclischen Estern (Lactonen) der Formel (VI),

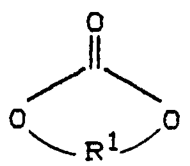

(VI)

und/oder der Formel (VII)

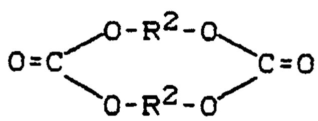

(VII)

und einem cyclischen aliphatischen Ester (Lacton) der Formel (VIII).

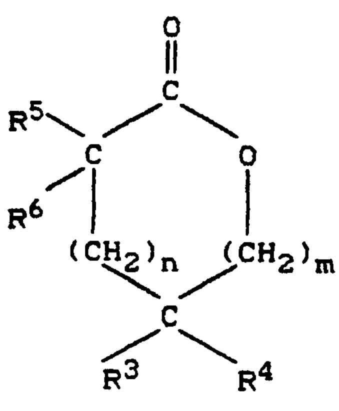

(VIII)

wobei
$R^1$ in (VI) ein lineares $C_3$-$C_{10}$-Alkylen, oder ein Rest der Formeln a) bis l)

a) $-CH_2CH_2CH(CH_3)-$,

b) $-CH_2CH_2OCH_2CH_2OCH_2CH_2-$,

c) $-CH_2CH(CH_3)CH_2CH_2C(CH_3)_2CH_2-$,

d) 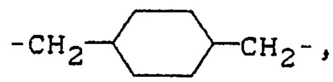 ,

e) 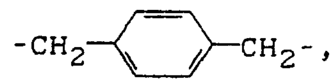 ,

f) 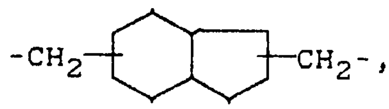 ,

g) 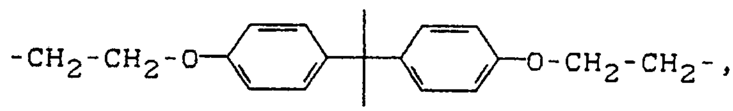 ,

h) 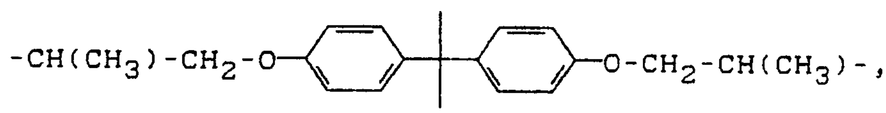 ,

i) 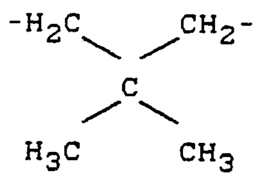 , j) 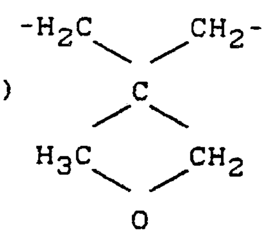 ,

k) 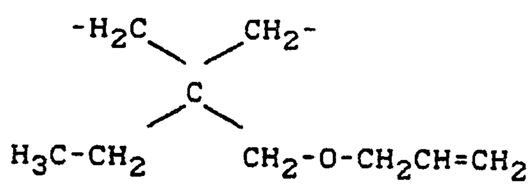 oder

l) 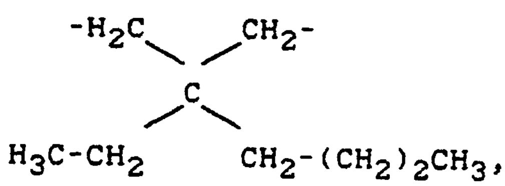 ,

$R^2$ in (VII) ein lineares $C_4$-$C_{12}$-Alkylen oder ein Rest der Formeln m) oder b)
m) $-CH_2-CH_2-O-CH_2-CH_2-$ oder
b) $-CH_2-CH_2-O-CH_2-CH_2-O-CH_2-CH_2$, und wobei
$R^3$, $R^4$, $R^5$ und $R^6$ in (VIII) gleich oder verschieden sind und H, $C_1$-$C_6$-Alkyl, $C_3$-$C_6$-Alkylen, $C_1$-$C_6$-Alkoxy und $C_2$-$C_6$-Alkylenoxy-$C_1$-$C_6$-alkyl sind und

wobei
m und n in (VIII) unabhängig voneinander 0, 1, 2, 3, 4, 5 oder 6 sind.
und gegebenenfalls
C. 0 bis 200 Gew.-Teile, bezogen auf 100 Gew.-Teile A und B, eines Pfropfpolymerisats harzbildender Monomere (Pfropfmonomere) auf einem Kautschuk (Pfropfgrundlage).

3. Formmassen gemäß Anspruch 1, enthaltend 2 bis 100 Gew.-Teile pro 100 Gew.-Teile A und B eines Pfropfpolymerisats C.

Europäisches Patentamt

# EUROPÄISCHER RECHERCHENBERICHT

Nummer der Anmeldung

EP 90113509.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| P,X | EP - A2 - 0 332 992 (BAYER AG) * Ansprüche * -- | 1-3 | C 08 L 69/00// (C 08 L 69/00 C 08 L 67:04 C 08 L 51:04) |
| A | US - A - 4 407 995 (DICK) * Ansprüche * -- | 1,2 | |
| A | DE - A1 - 3 738 143 (BAYER AG) * Ansprüche * -- | 1-3 | |
| A | EP - A1 - 0 135 679 (GENERAL ELECTRIC COMPANY) * Ansprüche * ---- | 1,2 | |

RECHERCHIERTE SACHGEBIETE (Int Cl 5)

C 08 L 51/00
C 08 L 67/00
C 08 L 69/00

Der vorliegende Recherchenbericht wurde für alle Patentansprüche erstellt.

| Recherchenort | Abschlußdatum der Recherche | Prüfer |
|---|---|---|
| WIEN | 02-11-1990 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82